# EUROPEAN PATENT SPECIFICATION

(11) **EP 2 128 493 B1**
(45) Date of publication and mention of the grant of the patent: **28.12.2011**
(21) Application number: 09160597.2
(22) Date of filing: 19.05.2009
(51) Int. Cl.: F16H 25/22

(54) **A bridge type ball screw**
Gebrückte Kugelschraube
Vis à billes de type pont

(30) Priority: 30.05.2008 JP 2008141961
(43) Date of publication of application: 02.12.2009
(73) Proprietor: NTN Corporation, Osaka (JP)
(72) Inventor: Kawashima, Kazuki c/o NTN Corporation, Iwata-shi, Shizuoka, (JP); Tateishi, Kouji c/o NTN Corporation, Iwata-shi, Shizuoka, (JP); Yoshida, Hirakazu c/o NTN Corporation, Iwata-shi, Shizuoka, (JP)
(74) Representative: Cohausz & Florack

(56) References cited:
- DE-A1-102006 055 300
- FR-A- 1 596 705
- GB-A- 920 649
- JP-A- 2001 289 301
- US-A- 5 937 700

## Description

### Field of the Invention

The present invention relates to a ball screw used for various kinds of machine tools such as an electric discharge machine and a tapping center or an electric-powered steering or actuator, and more particularly to a bridge type ball screw using a bridge member for circulating balls.

### Description of Background Art

The ball screw comprises a screw shaft formed with a helical ball rolling screw groove on its outer circumference, a nut adapted to be fitted on the screw shaft and formed with a helical ball rolling screw groove on its inner circumference, a large number of balls contained in a ball rolling passage formed by oppositely arranged screw grooves, and a ball circulating mechanism for bypassing the rolling passage to a radially outward circumferential passage, and used as a motion converting mechanism e.g. for converting a rotational motion of the nut to a linear motion of the screw shaft.

In general, there are several kinds of ball screws having different ball circulating mechanism and one of which is a bridge type. In this bridge type ball screw, the nut is fitted with a bridge member having a connecting passage for bypassing a rolling passage of balls radially outward to form a continuous circulation passage of balls. This bridge type ball screw is advantageous in its relatively simple and compact structure.

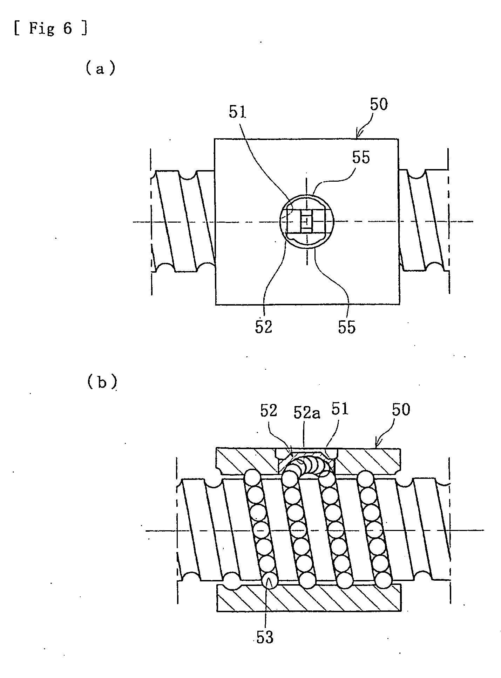

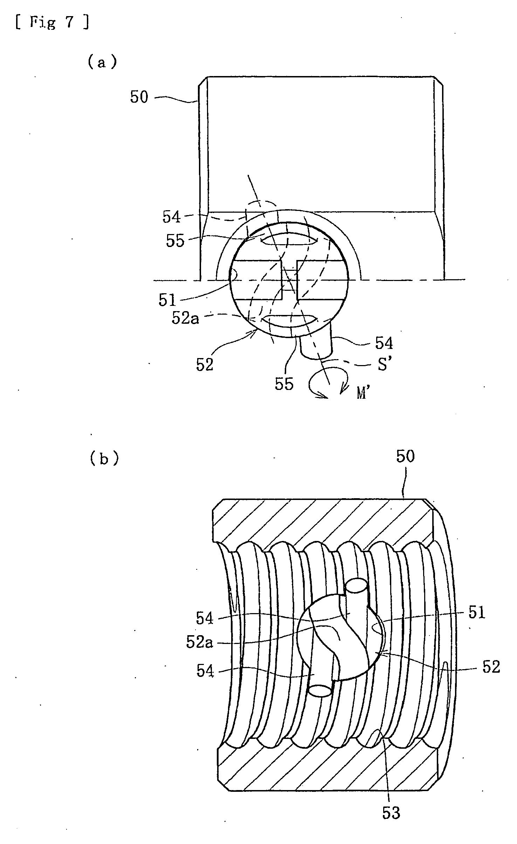

One representative example of this bridge type ball screw is shown in Figs. 6 and 7. In such a bridge type ball screw, a nut 50 is formed with a bridge window 51 into which a bridge member 52 can be fitted from a radially inside of the nut 50.

The bridge member 52 is formed with connecting grooves 52a for connecting mutually adjacent screw grooves 53. The bridge member 52 is also formed with a pair of wing members 54 and 54 formed as projections adapted to be engaged with the screw grooves 53 of the nut 50 for axially positioning the bridge member 52 relative to the nut 50. These wing members 54 and 54 are arranged at axially opposite ends of the bridge member 52 so that they project circumferentially opposite directions each other. The screw portions of the nut 50 with which the wing portions 54 and 54 engage form non-ball circulation portions.

On the other hand, the a pair of caulking portions 55 are formed on the ends of radially outer portion of the bridge member 52 symmetrically with respect to the center of the bridge window 51. The caulking portions 55 are plastically deformed outward and engaged with the opening edge of the bridge window 51 to secure the bridge member 52 thereon. The bridge member 52 formed with the wing portions 54 and 54 is advantageous in that prevention of fallout and positioning of the bridge member 52 as well as and high accuracy and high strength of the ball screw can be achieved, and that the bridge member 52 can be easily and securely achieved.
[Reference Patent Document 1] Japanese Laid-open Patent Publication No. 289301/2001.

### Disclosure of the Invention

### Problems to be solved by the Invention

However it has been found, according to the caulking form of the prior art, that rattle (loose) of the bridge member 52 would be sometimes caused and increased with the lapse of time, and that the rattle of the bridge member is influenced by the position of caulking by trial and error.

In the prior art the caulking position of the caulking portions 55 are set at circumferentially opposite positions of the nut 50 so that the caulking position corresponds to the direction of the connecting groove 52a along which balls circulate. However in a case of the bridge member 52 formed with wing portions 54 and 54,it is caused a moment M' which acts to rotate the bridge member 52 around a supporting axis S' connecting the opposite wing portions 54 and 54. Since the position of the caulking portions 55 of the prior art is set at a position of substantially same phase as the direction of the supporting axis S' of the wing portions 54 and 54, the bridge member 52 tends to be swung by the moment M' and increase the rattle.

Document US 5937700 represents the closest prior art, showing all the features of the preamble of claim 1.

It is, therefore, an object of the present invention to provide a bridge type ball screw which can prevent the increase of rattle of the bridge member by setting a best fit position of the caulking portions of the bridge member.

### Means for achieving the object

For achieving the object of the present invention there is provided, a bridge type ball screw according to the present invention of claim 1

This enables to support by the caulking portions the moment acting to cause the swing motion of the bridge member around the wing portions and thus to prevent the increase of the rattle of the bridge member.

It is preferable that the bridge window is formed as having a substantially circular configuration and the bridge member has a substantially cylindrical configuration corresponding to the circular configuration of the bridge window. This makes it possible to reduce manufacturing steps of the bridge window and accordingly the manufacturing cost as well as to easily and accurately position the bridge member relative to the nut in the axial direction and accordingly to improve the reliability of the ball screw.

It is also preferable to that the bridge member is formed of MIM or sintered material. This makes it possible to easily form the bridge member of metal having a complicated configuration.

It is preferable that the bridge member has the hardness of 20-35 HRC. This enables to obtain both ability of caulking and wear resistance.

It is preferable that the bridge member is formed of precipitation hardened stainless steel. This makes it possible to provide a bridge member having excellent corrosion resistance.

### Effects of the Invention

According to the bridge type ball screw of the present invention, since it comprises a screw shaft formed on its outer circumference with a helical screw groove, a nut formed on its inner circumference with a helical screw groove and adapted to be fitted on the screw shaft, a plurality of balls contained in a ball rolling passage formed by the opposite screw grooves, a bridge member formed with a connecting groove for connecting adjacent portions of the ball rolling passage to make the rolling passage a ball circulating passage and fitted in a bridge window formed in a barrel of the nut, a pair of wing portions for preventing fallout of the bridge member formed on ends of radially inner portion of the bridge member and adapted to be engaged with the screw grooves of the nut, and caulking portions formed on the diametrically outer ends of the bridge member and adapted to be engaged with an opening edge of the bridge window characterized in that the caulking portions are arranged at a position so that they can resist an action of the moment causing a rotation of the bridge member around the supporting axis passing through the wing portions, it is possible to support by the caulking portions the moment acting to cause the swing motion of the bridge member around the wing portions and thus to prevent the increase of the rattle of the bridge member.

### Best mode for carrying out the Invention

Best mode for carrying out the present invention is a bridge type ball screw comprising a screw shaft formed on its outer circumference with a helical screw groove, a nut formed on its inner circumference with a helical screw groove and adapted to be fitted on the screw shaft, a plurality of balls contained in a ball rolling passage formed by the opposite screw grooves, a bridge member formed with a connecting groove for connecting adjacent portions of the ball rolling passage to make the rolling passage a ball circulating passage and fitted in a bridge window formed in a barrel of the nut, a pair of wing portions for preventing fallout of the bridge member formed on ends of radially inner portion of the bridge member and adapted to be engaged with the screw grooves of the nut, and caulking portions formed on the diametrically outer ends of the bridge member and adapted to be engaged with an opening edge of the bridge window characterized in that the caulking portions are arranged at a position so that they can resist an action of the moment causing a rotation of the bridge member around the supporting axis passing through the wing portions.

### Embodiment

One preferred embodiment of the present invention will be described with reference to accompanying drawings.

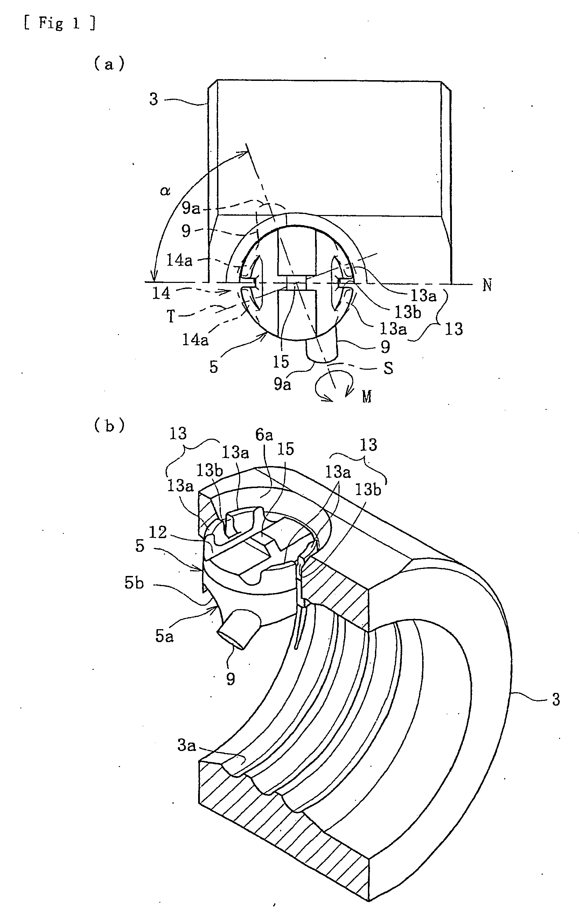

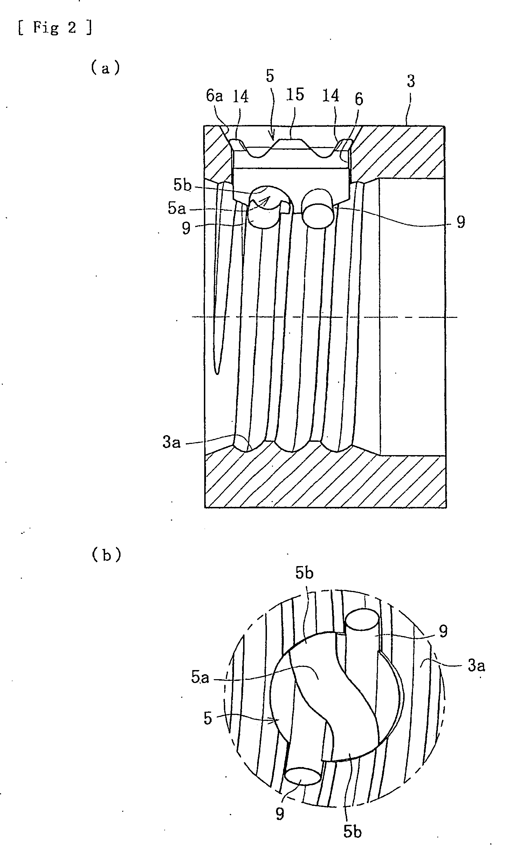

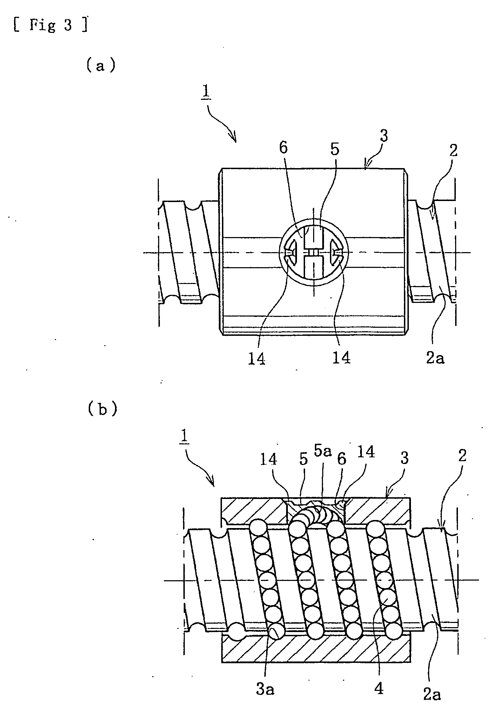

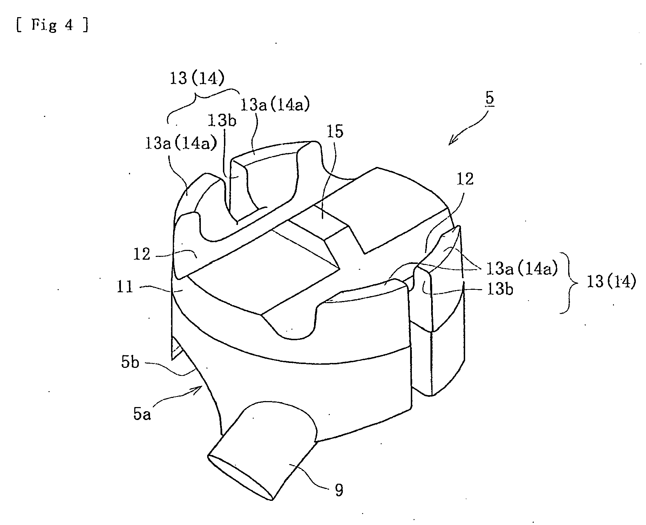

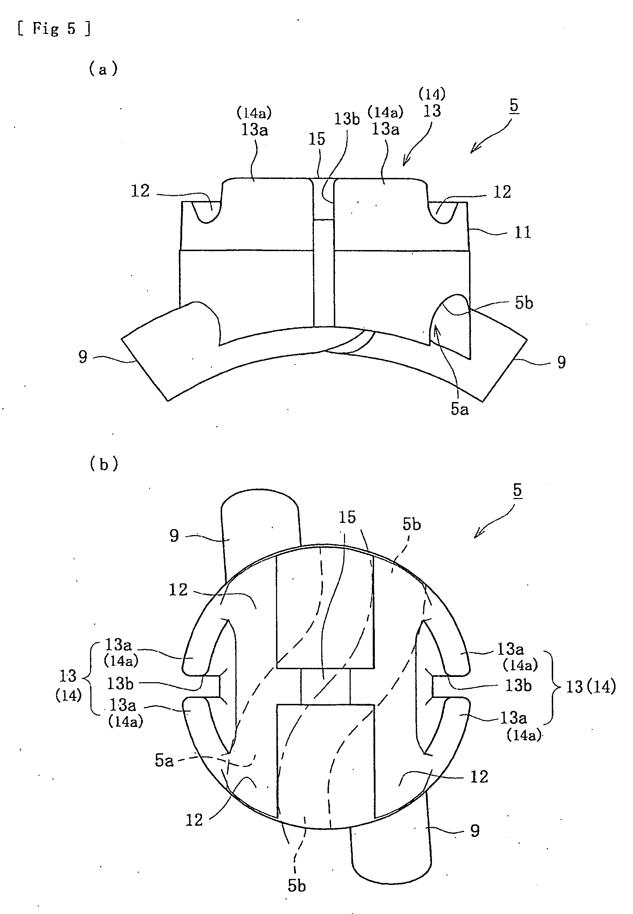

Fig. 1 shows one preferred embodiment of a bridge type ball screw of the present invention, wherein Fig. 1 (a) is a plan view of a half of a nut into which a bridge member of one preferred embodiment of the present invention is inserted and Fig. 1 (b) is a perspective view of the nut and the bridge member of Fig. 1 (a). Fig. 2(a) is a longitudinal section view of the nut of the present invention, and Fig. 2(b) is an enlarged view taken from a side of radially inward of the nut of Fig. 2(a). Fig. 3(a) is a plan view of the bridge type ball screw of the present invention, and Fig. 3(b) is a longitudinal section view of the bridge type ball screw of Fig. 3(a). Fig. 4 is a perspective view of the bridge member of the present invention. Fig. 5(a) is a front elevation view of the bridge member of the present invention, and Fig. 5(b) is a plan view of the bridge member of Fig. 5(a).

As shown in Figs. 3(a) and 3(b), the bridge type ball screw 1 comprises a screw shaft 2 formed with a helical screw groove 2a on its outer circumference; a nut 3 formed with a helical screw groove 3a on its inner circumference and adapted to be fitted on the screw shaft 2; a large number of balls 4 contained in a rolling passage formed by oppositely arranged screw grooves 2a and 3a; and a bridge member 5 functioning as a circulating member for the balls 4.

A configuration of longitudinal section of each of the screw grooves 2a and 3a may be circular arc or Gothic arc configuration. In this embodiment the Gothic arc configuration is adopted from reasons that a large contacting angle relative to the ball 4 and a small axial gap can be ensured. This enables to increase rigidity against an axial load and to suppress generation of vibration of the bridge type ball screw.

As shown in Fig. 1 and Fig. 2, a substantially circular bridge window 6 to which the substantially cylindrical bridge member 5 is fitted is formed in a barrel of the cylindrical nut 3 so that bridge window 6 passes through the wall of the barrel and cuts a portion of the screw groove 3a. A connecting groove 5a for connecting mutually adjacent screw grooves 3a of the nut 3 by one round is formed in the bridge member 5. This connecting groove 5a is formed as having a S-shaped configuration so that it can smoothly connect the mutually adjacent screw grooves 3a of the nut 3. Inlet/outlet ports 5b and 5b at opposite ends of the connecting groove 5a open toward circumferentially opposite directions of the nut 3 each other and are connected to the adjacent screw grooves 3a and 3a. Thus the connecting groove 5a and the screw groove 3a of substantially one round form a rolling passage for the balls 4.

A large number of balls 4 contained between the screw grooves 2a and 3a in the ball rolling passage roll along the screw grooves 2a and 3a. The balls 4 are guided to the connecting groove 5a of the bridge member 5, climb over the screw ridge of the screw shaft 2 and return to the adjacent screw groove 3a, and roll again along the screw grooves 2a and 3a. The depth of the connecting groove 5a is set so that balls 4 can climb over the screw ridge of the screw shaft 2 within the connecting groove 5a.

A pair of wing portions 9 and 9 acting as projections for preventing fallout of the bridge member 5 are formed on ends of radially inner portion of the bridge member 5 by the side of the inlet/outlet ports 5b and 5b. The wing portions 9 and 9 are formed as cylindrical rods projecting in opposite directions each other beyond the outer diameter of the bridge member 5 and engaged with screw groove portions not connected to the inlet/outlet ports 5b and 5b via a predetermined radial gap. The bridge member 5 is axially positioned relative to the nut 3 and prevented from being fallen out from the bridge window 6 radially outward.

The pair of wing portions 9 and 9 engage the screw grooves 3a and 3a axially apart each other by one pitch. Accordingly a moment M is caused on the bridge member 5 around a supporting axis S connecting the wing portions 9 and 9 when the balls 4 enter the connecting groove 5a from the inlet/outlet port 5b as shown in Fig. 1 (a).

According to the present invention, the caulking portions 14 and 14 are arranged at a position so that they can resist an action of the moment M causing a rotation of the bridge member 5 around the supporting axis S passing through the wing portions 9 and 9. In particularly as shown in Fig. 1 (a), the supporting axis S is a line passing through tips 9a and 9a of the wing portions 9 and 9 and is inclined by a predetermined angleα relative to a central axis N of the nut 3.

The caulking portions 14 and 14 are formed by caulking guiding walls 13 and 13 formed on a head portion 11 i.e. a radially outer end of the bridge member 5. As shown in Fig. 4 and Fig. 5, the guiding walls 13 and 13 are arranged radially outward from recessed portions 12 and 12 formed at diametrically opposite sides (axially opposite sides of the nut 3) and stand up therefrom. After the bridge member 5 has been fitted in the bridge window 6 and the wing portions 9 and 9 have been engaged with the screw grooves 3a of the nut 3, the caulked portions 14 and 14 are formed by plastically deforming the guiding walls 13 and 13 toward an opening edge portion 6a of the bridge window 6.

Since the rattle of the bridge member 5 is caused when an amount of spring back of the caulked portion 14 and 14 is large, the opening edge portion 6a of the bridge window 6 is formed as an inclined surface. A slit 13b is formed in each guiding wall 13 of the bridge member 5 to assure the deformability of the guiding wall 13. Each guiding wall 13 is divided to two guiding wall pieces 13a and 13a by the slit 13b and accordingly each caulking (caulked) member 14 comprises a pair of caulking (caulked) pieces 14a and 14a corresponding to a pair of guiding wall pieces 13a and 13a.

In this embodiment, the center of each caulked portion 14 i.e. the position of the slit 13b is arranged on the central axis N of the nut 3 and the pair of caulked pieces 14a and 14a separated by the slit 13b are engaged with the opening edge portions 6a of the bridge window 6. In addition one of the caulking pieces 14a and 14a is positioned on a line T passing through the center of the bridge window 6 and orthogonally crossing the supporting axis S passing through the wing portions 9 and 9.

Furthermore, it is also allowed that the central slit 13b between the caulking portions 14 and 14 or the other caulking piece 14a may be positioned on the supporting axis S. In addition, it is not necessary that the caulking portions 14 and 14 are always positioned on the supporting axis S and may be arranged at positions out of the supporting axis S. The supporting axis S does not necessary form the center of rotation of the wings 9 and 9 the center of rotation may be shifted according to gap between the wing portions 9 and 9 and the screw grooves 3a and 3a or to the direction of rotation of the screw shaft 2 and the nut 3. In conclusion the caulking portions 14 and 14 are arranged at a position so that they can resist an action of the moment M causing a rotation of the bridge member 5 around the supporting axis S passing through the wing portions 9 and 9.

The bridge member 5 is made by injection molding sintered ally obtained by plastically refining metallic powder. For preparation of the injection molding, firstly, plastic and binder comprising wax are mixed and then granulated to pellets from the mixed material. The granulated pellets are fed to a hopper of an injection molding machine and injected into a mold under a melted condition to form the sintered alloy by the so-called "MIM" (Metal Injection Molding) method. The sintered alloy formed by MIM can be easily and exactly formed to the bridge member of desired configuration and dimension although the bridge member requires high difficulty in work and has a complicated configuration. It may be appreciated that the bridge member 5 can be made of any other sintered material.

The metallic powder used in this embodiment is precipitation hardened stainless steel having high corrosion resistance. In this case it is preferable to use SUS 630 comprising C (0.07 wt%), Cr (17 wt%), Ni (4 wt%), Cu (4 wt %), and Fe (the rest). SUS 630 is able to increase its surface hardness by solution treatment and to obtain strong toughness and high hardness. It is also preferable to set the hardness of the sintered bridge member 5 within a range 20-35 HRC to satisfy both the ability of caulking and the wear resistance.

When the bridge member 5 is made of sintered alloy formed by MIM of precipitation hardened stainless steel, at least the connecting groove 5a in which a large stress would be caused has the impression resistance and the wear resistance. In addition since the guiding walls 13 forming the caulking portions 14 have high toughness, it is possible to prevent generation of clacks etc. during caulking the bridge member 5 to the nut 3.

According to the preferred embodiment of the present invention, a rib 15 (Fig. 4) is formed between the recessed portions 12 and 12 on the head 11 of the bridge member 5. The rib 15 has a trapezoid configuration and is formed so that it projects radially outward to a height substantially same as that of the guiding walls 13 and 13. The rib 15 can be used not only for grasping it during mounting the bridge member 5 in the bridge window 6 of the nut 3 to finely adjust the position of the bridge member relative to the nut 3 but also for suppressing deformation of the guiding walls 13 of the bridge member 5 during its sintering process.

As previously described, according to the present invention, since the caulking portions 14 and 14 are arranged at a position so that they can resist an rotation of the bridge member 5 around the supporting axis S, the moment M is supported by the caulking portions 14 and 14 and thus increase of the rattle of the bridge member 5 can be prevented. Especially, since each of the caulking portions 14 and 14 is formed with the slit 13b, it is possible to improve the deformability of the caulking pieces 14a and 14a during the caulking operation and thus to prevent generation of the rattle of the caulked portions 14 and 14.

Furthermore, since the bridge window 6 is formed as having a substantially circular configuration and the bridge member 5 has a substantially cylindrical configuration corresponding to the circular configuration of the bridge window 6, it is possible to reduce manufacturing steps of the bridge window 6 and accordingly the manufacturing cost as well as to easily and accurately position the bridge member 5 relative to the nut 3 in the axial direction and accordingly to improve the reliability of the ball screw 1.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in industry

The bridge type ball screw of the present invention can be applied to a bridge type ball screw for example used in an electric-powered actuator of an automobile.

### Brief Description of the Drawings

[Fig. 1 (a)] A plan view of a half of a nut into which a bridge member of one preferred embodiment of the present invention is inserted;
[Fig. 1 (b)] A perspective view of the nut and the bridge member of Fig. 1 (a);
[Fig. 2(a)] A longitudinal section view of the nut of the present invention;
[Fig. 2(b)] An enlarged view taken from a side of radially inward of the nut of Fig. 2(a);
[Fig. 3 (a)] A plan view of the bridge type ball screw of the present invention;
[Fig. 3 (b)] A longitudinal section view of the bridge type ball screw of Fig. 3(a);
[Fig. 4] A perspective view of the bridge member of the present invention;
[Fig. 5(a)] A front elevation view of the bridge member of the present invention;
[Fig. 5(b)] A plan view of the bridge member of Fig. 5(a);
[Fig. 6(a)] A front elevation view of the bridge type ball screw of the prior art;
[Fig. 6(b)] A longitudinal section view of the bridge type ball screw of Fig. 6(a);
[Fig. 7(a)] A plan view of a half of a nut into which a bridge member of the prior art is inserted; and
[Fig. 7(b)] A longitudinal section view of the nut of Fig. 7(a).

### Explanation of Reference Numerals

- 1: ball screw
- 2: screw shaft
- 2a, 3a: screw groove
- 3: nut
- 4: all
- 5: bridge member
- 5a: connecting groove
- 5b: inlet/outlet port
- 6: bridge window
- 6a: opening edge portion
- 9: wing portion (projection for preventing fallout of bridge member)
- 9a: tip of wing portion
- 11: head portion
- 12: recessed portion
- 13: guiding wall
- 13a: guiding wall piece
- 13b: slit
- 14: caulking (caulked) portion
- 14a: caulking piece
- 15: rib
- N: central axis
- S: supporting axis
- α: angle between central axis and supporting axis

## Claims

1. A bridge type ball screw (1) comprising a screw shaft (2) formed on its outer circumference with a helical screw groove (2a), a nut (3) formed on its inner circumference with a helical screw groove (3a) and fitted on the screw shaft (2), a plurality of balls (4) contained in a ball rolling passage formed by the opposite screw grooves (2a, 3a), a bridge member (5) formed with a connecting groove (5a) for connecting adjacent portions of the ball rolling passage to make the rolling passage a ball circulating passage and fitted in a bridge window (6) formed in a barrel of the nut (3), a pair of wing portions (9) for preventing fallout of the bridge member (5) formed on ends of radially inner portion of the bridge member (5) and engaged with the screw grooves (3a) of the nut (3), and plastically deformed caulking portions (14) formed on the diametrically outer ends of the bridge member (5) and engaged with an opening edge (6a) of the bridge window (6), wherein each of the caulking portions (14) is formed with a slit (13b), **characterized in that** one of the caulking portions (14) is arranged on a line (T) that passes through the centre of the bridge window (6) and orthogonally crosses a supporting axis (S) that passes through the wing portions (9) so that the said caulking portions (14) can passes through the wing portions (9) so that can resist an action of a moment (M) causing a rotation of the bridge member (5) around the supporting axis (S).

2. A bridge type ball screw (1) of claim 1 wherein the bridge window (6) is formed as having a substantially circular configuration and the bridge member (5) has a substantially cylindrical configuration corresponding to the circular configuration of the bridge window (6).

3. A bridge type ball screw (1) of claim 1 or 2 wherein the bridge member (5) is formed of MIM or sintered material.

4. A bridge type ball screw (1) of any one of claims 1 through 3 wherein the bridge member (5) has a hardness of 20-35 HRC.

5. A bridge type ball screw (1) of any one of claims 1 through 4 wherein the bridge member (5) is formed of precipitation hardened stainless steel.

## Patentansprüche

1. Brückenartige Kugelgewindespindel (1), umfassend eine Spindelwelle (2), die an ihrem Außenumfang mit einer spiralförmigen Gewindenut (2a) ausgebildet ist, eine Mutter (3), die an ihrem Innenumfang mit einer spiralförmigen Gewindenut (3a) ausgeführt ist und auf der Spindelwelle (2) angebracht ist, mehrere Kugeln (4), die in einem Kugeldurchlauf, welcher durch die einander gegenüberliegenden Gewindenuten (2a, 3a) gebildet ist, enthalten sind, ein Brückenelement (5), das mit einer Verbindungsnut (5a) ausgebildet ist, um benachbarte Abschnitte des Kugeldurchlaufs zu verbinden, um den Kugeldurchlauf zu einem Kugelumlaufzu machen, und in ein Brückenfenster (6), welches in einem Zylinder der Mutter (3) gebildet ist, eingesetzt ist, ein Paar von Flügelabschnitten (9) zur Verhinderung eines Herausfallens des Brückenelements (5), das an Enden eines radial inneren Abschnitts des Brückenelements (5) gebildet ist und mit den Gewindenuten (3a) der Mutter (3) in Eingriff steht, und plastisch verformte Verstemmungsabschnitte (14), die an den diametral äußeren Enden des Brückenelements (5) gebildet sind und mit einer offenen Kante (6a) des Brückenfensters (6) in Eingriff stehen, wobei jeder der Verstemmungabschnitte (14) mit einem Schlitz (13b) ausgeführt ist, **dadurch gekennzeichnet, dass** einer der Verstemmungsabschnitte (14) auf einer Linie (T) angeordnet ist, die durch die Mitte des Brückenfensters (6) verläuft und eine Stützachse (S), welche durch die Flügelabschnitte (9) verläuft, rechtwinkelig kreuzt, so dass der Verstemmungsabschnitt (14) einer Wirkung eines Moments (M), das eine Drehung des Brückenelements (5) um die Stützachse (S) verursacht, widerstehen kann.

2. Brückenartige Kugelgewindespindel (1) nach Anspruch 1, wobei das Brückenfenster (6) so gebildet ist, dass es eine im Wesentlichen runde Gestaltung aufweist, und das Brückenelement (5) eine im Wesentlichen zylinderförmige Gestaltung aufweist, die der runden Gestaltung des Brückenelements (6) entspricht.

3. Brückenartige Kugelgewindespindel (1) nach Anspruch 1 oder 2, wobei das Brückenelement (5) aus einem MIM- oder einem Sintermaterial gebildet ist.

4. Brückenartige Kugelgewindespindel (1) nach einem der Ansprüche 1 bis 3, wobei das Brückenelement (5) eine Härte von 20 bis 35 HRC aufweist.

5. Brückenartige Kugelgewindespindel (1) nach einem der Ansprüche 1 bis 4, wobei das Brückenelement (5) aus ausscheidungsgehärtetem Edelstahl gebildet ist.

## Revendications

1. Vis à billes de type pont (1) comprenant un axe de vissage (2) présentant sur sa circonférence extérieure, une rainure hélicoïdale (2a), un boulon (3), présentant sur sa surface intérieure, une rainure hélicoïdale (3a) et adaptée à l'axe de vissage (2), une série de billes (4), présentes dans un passage de roulement des billes formé par les rainures opposées (2a, 3a), un élément de pont (5) constitué d'une rainure de connexion (5a) pour connecter les parties adjacentes du passage de roulement des billes de manière à former une passage pour la circulation des billes, et emboîté dans une fenêtre de pont (6) formée dans un barreau de l'écrou (3), une paire d'ailettes (9) pour prévenir la chute de l'élément de pont (5), formées sur les extrémités de la partie interne radiale de l'élément de pont (5) et qui s'engagent dans les rainures (3a) de l'écrou (3), et des parties d'engagement (14) à déformation plastique, formées sur les extrémités externes opposées de l'élément de pont (5) et s'engageant avec un bord d'ouverture (6a) de la fenêtre de pont (6), où chacune des parties d'engagement (14) est formée avec une fente (13b), **caractérisé en ce que** l'une des parties d'engagement (14) est disposée sur une ligne (T) qui passe par le centre de la fenêtre de pont (6) et qui croise de manière orthogonale, un axe de support (S), qui passe par les ailettes (9), de sorte que lesdites parties d'engagement (14) peuvent résister à l'action d'un moment (M) provoquant la rotation de l'élément de pont (5) autour de l'axe de support (S).

2. Vis à billes de type pont (1) selon la revendication 1, où la fenêtre de pont (6) présente une configuration sensiblement circulaire et l'élément de pont (5) a une configuration sensiblement cylindrique correspondant à la configuration circulaire de la fenêtre de pont (6).

3. Vis à billes de type pont (1) selon la revendication 1 ou 2, où l'élément de pont (5) est composé de MIM ou d'un matériau fritté.

4. Vis à billes de type pont (1) selon l'une quelconque des revendications 1 à 3, où l'élément de pont (5) a une dureté de 20-35 HRC.

5. Vis à billes de type pont (1) selon l'une quelconque des revendications 1 à 4, où l'élément de pont (5) est formé par précipitation d'acier inoxydable durci.
